# EUROPEAN PATENT APPLICATION

(11) **EP 4 804 080 A1**
(43) Date of publication of application: **09.09.2026**
(21) Application number: 26150586.1
(22) Date of filing: 07.01.2026
(51) Int. Cl.: G06N 3/045, G06N 3/098

(54) **SYSTEM AND METHOD FOR FEDERATED TRAINING OF MACHINE LEARNING MODELS**

(30) Priority: 05.03.2025 US 202563767327 P
(71) Applicant: Milestone Systems A/S, 2605 Brøndby (DK)
(72) Inventor: NASROLLAHI, Kamal, 2605 C/O Milestone Systems A/S,Banemarksvej 50C Brondby (DK); DVIR, Igal, 3093109 9 Hakalanit St, Zichron Yaakov (IL)
(74) Representative: Pearl Cohen UK

(57) **Abstract**

A system and method for generating a federated machine learning (ML) model comprising: distributing, by a software agent executed by a computing device, a first machine learning model to a plurality of user devices, wherein the software agent provides the plurality of user devices with instructions for the training of the first ML model; each of the plurality of user devices, training the first ML model individually by submitting to the first ML model labelled user data sets, wherein the training of the ML model proceeds according to the instructions provided by the software agent; receiving, by the computing device, the individually trained first ML models, and identifying whether the ML models have been trained according to the software agent's instructions; and combining the individually trained first ML models to create a federated ML model which has been trained according to the software agent's instructions.

## Description

### CROSS REFERENCE TO RELATED APPLICATIONS

This application claims the benefit of U.S. Provisional Patent Application No. 63/767,327, filed on March 5, 2025 which is hereby incorporated by reference in its entirety.

### TECHNICAL FIELD OF THE INVENTION

The present invention relates generally to the generation of machine learning models, specifically the training of machine learning models based on federated machine learning.

### BACKGROUND OF THE INVENTION

The use and adaptation of foundation models, including large language models (LLMs), vision-language models (VLMs), and more generally large multimodal models (LMMs), has shown great potential in improving many businesses.

However, training such models can include two inherent issues: 1) the need for huge amounts of data and the need for large computing resources. For example, OpenAI's Generative Pre-trained Transformer 3 (GPT-3) was trained on about 570GB of textual data, and used 10,000s petaflop/s-days, requiring 1000s of NVIDIA's A100 and H100 Graphics Processing Units (GPUs). The total cost of GPUs needed for training and the cost of each training cycle of such models is in order of millions of dollars. 2) Beyond this, there are legitimate concerns about copyright and privacy, when it comes to the data processing in the training of such models. One therefore needs to be at the scale of OpenAI, or at least DeepSeek, which still owns 1000s of GPUs, to be able to train such models from ground-up.

Although some of these companies have attempted to address the first issue and gathered huge amounts of data and provided large computing resources, they do not necessarily provide any form of solutions for the second one, given these concerns; that is, the protection of copyrighted and personal data in training data sets during the training of the ML models.

Further, the abovementioned foundation ML models are trained or pre-trained by images coming from different sources which may not always arise from relevant contexts. While this is sometimes intentional, it comes at the cost of sacrificing the performance of the model in some domains to make the model balanced in terms of performance across different domains. For example, these images are not only taken from different domains, but they are taken in different imaging conditions, qualities, fields of view, etc.

Since the number of deployed surveillance cameras is constantly increasing, the volume of video captured by these cameras rises constantly. In view of the vast amount of footage, video recordings may be discarded or underutilized and may be under constraint by privacy laws, leaving the use of footage generated by surveillance cameras primarily for retrospective investigations rather than proactive or predictive security.

Thus, there is a need for a solution that can provide protection of copyrighted and personal data in training data sets during the training of the ML models. There is also a need for a solution that can provide a machine learning model based on the processing of user data sets that include surveillance data sets, e.g. surveillance videos, which are accurately labelled, representative and balanced according to those features desired in training machine learning models.

### SUMMARY OF THE INVENTION

Embodiments of the invention may improve the technology of decentralized training of machine learning models by, for example, intelligently creating a software agent which includes instructions for the training to user devices. Improvements and advantages of embodiments of the invention may include a software agent which (i) provides ML models to user devices, e.g. in form of a pre-trained model, (ii) provides instructions for the training of the ML models at the user devices and (iii) identifies whether or not an ML model has been correctly trained with respect to data on devices. Embodiments may more efficiently create ML models which have a reduced false positive assessment of alarms for identified events of user data sets, or tackle false negatives that lead to an absence of events.

In one aspect, the present invention allows building or adapting an ML model by focusing on data, e.g. images, videos, audio signals, etc., taken by surveillance cameras and field of view of sensors automatically assessing relationships between data items in two or more video files. Embodiments of the invention also improve the training of ML models by making the training of the models more practical/affordable for companies with a limited number of user data sets via the use of federated learning for the generation of the ML models, e.g. ML models to be used in the surveillance domain. Advantageously, a software application may instruct user devices to use data sets that belong to the user's site, not only with user's own consent (and without transfer to a central server), but also with the user's device proactive involvement in the labelling of the user data sets.

Advantageously, the ML models can be built and used directly with user devices. Further, once an ML model is built, they may be shared with the public, e.g. other users who want to play the role of Host within their even network of users. This can enable the customization of the ML model.

One embodiment includes a method of generating a federated machine learning (ML) model, the method including: distributing, by a software agent executed by a computing device, a first machine learning model to a plurality of user devices, wherein the software agent provides the plurality of user devices with instructions for the training of the first ML model; each of the plurality of user devices, training the first ML model individually by submitting to the first ML model labelled user data sets, wherein the training of the ML model proceeds according to the instructions provided by the software agent; receiving, by the computing device, the individually trained first ML models, and identifying whether the ML models have been trained according to the software agent's instructions; and combining the individually trained first ML models to create a federated ML model which has been trained according to the software agent's instructions.

In some embodiments, the first ML model is a pre-trained model and the pre-trained model is trained individually by submitting to the pre-trained ML model labelled user data sets to provide trained first ML models.

In some embodiments, the individual training of the first ML model with the labelled user data sets comprises providing the first ML model with pairs of an event and alarm status for the event.

In some embodiments, the pre-trained ML model is trained on labelled user data sets which do not include an event and do not include an alarm status.

In some embodiments, the alarm status for the event is one of: a false positive alarm status, a false negative alarm status, a true positive alarm status and a true negative alarm status.

In some embodiments, the event is labelled with the alarm status by a human operator.

In some embodiments, training with labelled user data sets comprises reviewing, by a user or also referred to herein a human operator, data sets comprising events for which no positive alarm status has been raised by the first ML model, and identifying whether or not the raising of no positive alarm status was correct.

In some embodiments, the user data sets are at least partially labelled.

In some embodiments, the events are recorded by cameras, wherein the cameras are one of: a field of view sensor and a surveillance camera.

In some embodiments, the federated ML model undergoes a further iteration of training by the plurality of user devices by distributing, by a computing device, the federated ML model to a plurality of user devices; each of the plurality of user devices, training the federated ML model individually by submitting to the federated ML model labelled user data sets; receiving, by the computing device, the individually trained federated ML models; and combining the individually trained federated ML models to create an updated federated ML model.

In some embodiments, the federated ML model is used in the identification of alarms for events identified in videos recorded by surveillance cameras, and the labelled user data sets include surveillance data selected from one or more of: image data items, video data items and audio data items.

One embodiment may include a system for generating a federated machine learning "ML" model, the system including: a computer processor arranged to: distribute a first machine learning model and a software agent to a plurality of user devices, wherein the software agent provides the plurality of user devices with instructions for the training of the first ML model; train the first ML model distributed to each of the plurality of user devices individually by submitting to the first ML model labelled user data sets, wherein the training of the ML model proceeds according to the instructions provided by the software agent; receive the individually trained first ML models, and identifying whether the ML models have been trained according to the software agent's instructions; and combine the individually trained first ML models to create a federated ML model which has been trained according to the software agent's instructions.

One embodiment may include a non-transitory computer readable medium for generating a federated ML model including a set of instructions that, when executed, causes at least one computer processor to: distribute, by a software agent executed by a computing device, a first machine learning model to a plurality of user devices, wherein the software agent provides the plurality of user devices with instructions for the training of the first ML model; train the first ML model individually by submitting to the first ML model labelled user data sets, wherein the training of the ML model proceeds according to the instructions provided by the software agent; receive the individually trained first ML models, and identify, by the software agent, whether the ML models have been trained according to the software agent's instructions; and combine the individually trained first ML models to create a federated ML model which has been trained according to the software agent's instructions.

These, additional, and/or other aspects and/or advantages of the present invention may be set forth in the detailed description which follows; possibly inferable from the detailed description; and/or learnable by practice of the present invention.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
FIG. 1 depicts a flowchart of methods of generating federated ML models, according to some embodiments of the present invention.
FIG. 2 is a schematic drawing of a system for generating federated ML models, according to some embodiments of the invention.
FIG. 3 is an illustration of a workflow in the use of federated ML models, according to some embodiments of the present invention.
FIG. 4 shows a block diagram of an exemplary computing device which may be used with embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF EMBODIMENTS OF THE INVENTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Before at least one embodiment of the invention is explained in detail, it is to be understood that the invention is not limited in its application to the details of construction and the arrangement of the components set forth in the following description or illustrated in the drawings. The invention is applicable to other embodiments that may be practiced or carried out in various ways as well as to combinations of the disclosed embodiments. Also, it is to be understood that the phraseology and terminology employed herein is for the purpose of description and should not be regarded as limiting.

Unless specifically stated otherwise, as apparent from the following discussions, it is appreciated that throughout the specification discussions utilizing terms such as "processing", "computing", "calculating", "determining", "enhancing" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. Any of the disclosed modules or units may be at least partially implemented by a computer processor.

As used herein, "machine learning", "machine learning algorithms", "machine learning models", "ML", or similar, may refer to models built by algorithms in response to/based on input sample or training data. ML models may make predictions or decisions without being explicitly programmed to do so. ML models require training/learning based on the input data, which may take various forms.

ML models may, for example, include Large Language Models (LLM) such as Generative Pre-Trained Transformer (GPT), Bidirectional Encoder Representations from Transformers (BERT), Pathways Language Model (PaLM) and the like, (artificial) neural networks (NN), decision trees, regression analysis, Bayesian networks, Gaussian networks, genetic processes, etc. Additionally or alternatively, ensemble learning methods may be used which may use multiple/modified learning algorithms, for example, to enhance performance. Ensemble methods, may, for example, include "Random forest" methods or "XGBoost" methods.

It will be understood that any subsequent reference to "machine learning", "machine learning algorithms", "machine learning models", "ML", or similar, may refer to any/all of the above ML examples, as well as any other ML models and methods as may be considered appropriate.

As used herein, "user" may refer to an entity that possesses a client computer, which can be used for improving a model through fine-tuning or any other learning techniques. A user may also have its own set of sub-users, each with their own client computer(s).

As used herein "pre-training of ML models" may refer the initial training phase in which the ML model is exposed to large, general data sets to learn broad patterns, features, or representations relevant to a wide range of tasks. This pre-trained model can then be fine-tuned or adapted to specific downstream tasks using smaller, domain-specific data sets, e.g. to data sets in the surveillance domain.

Surveillance with respect to cameras may refer to the continuous or periodic monitoring, recording, and analysis of visual scenes captured by one or more cameras to observe activities, objects, or events within a defined area. Such cameras, often fixed or networked, are used to enhance security, safety, or situational awareness by detecting, identifying, and documenting events and alarms, e.g. for anomalies, in real time or retrospectively.

In one aspect, disclosed herein are systems and methods for the generation of a machine learning model which use federated learning. Specifically, the machine learning models generated by the method disclosed herein may be machine learning models that are used in the surveillance domain, e.g. to analyse images/video data collected from surveillance devices such as cameras, microphones, lidars, etc.). Federated learning may be a machine learning approach that enables multiple devices or organizations to collaboratively train a shared ML model without exchanging their raw data. Instead of centralizing all data in one place, each participant (often called a client) may train the model locally on its own data and only shares model updates (like gradients or weights) with a central server. The server then aggregates these updates to improve the global model.

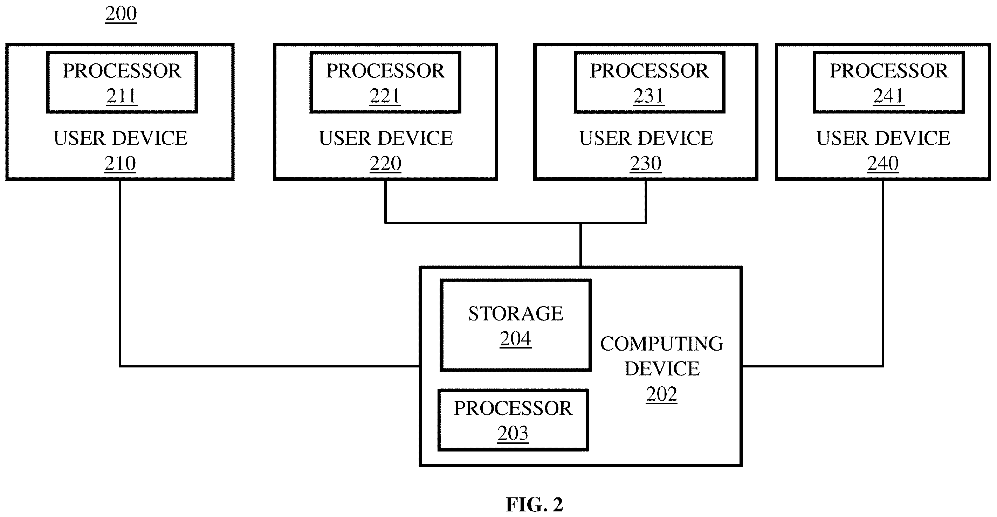

Advantageously, labelled user data sets remain at a user device, e.g. a user device 210, 220, 230 or 240 as shown in FIG. 2. Further, since the user data sets remain at the user device, the user data sets remain under the user's control and are not transferred to a server which does not belong to the user. Users may also advantageously be involved in labelling data sets which are used in the training of individual distributed models, on the respective devices, and then consolidated in the federated ML model without the training data leaving the devices.

Advantageously, a software agent may coordinate local training on surveillance user devices, e.g. devices 210, 220, 230 or 240 as shown in FIG. 2. A federated model may be derived by combining the individually trained ML models whilst ensuring data privacy since no training data sets used for the training of the respective pre-trained ML model are distributed to the computing device hosting the software agent and the federated ML model. Thus, a federated ML model may be created via the training of first or pre-trained ML models with user data sets in the field of surveillance by aggregating locally trained ML models from real-world devices, thereby ensuring privacy and domain-specific accuracy.

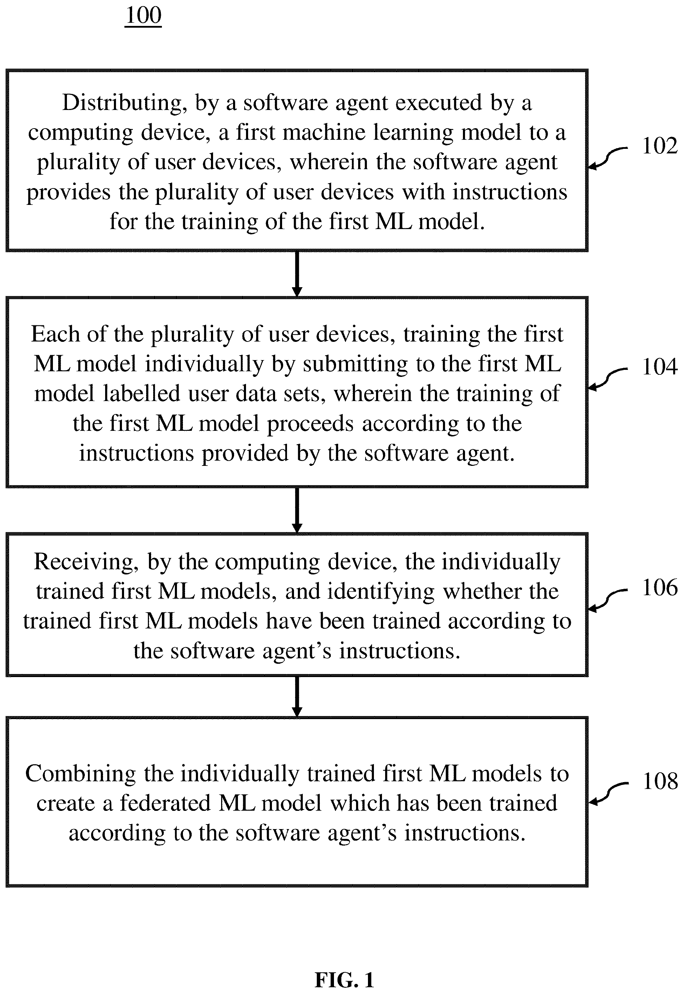

FIG. 1 shows a flowchart for an exemplary method 100 of generating a federated machine learning model (ML) model which may be used with embodiments of the present invention. A federated machine learning model may be a large, pre-trained model that can serve as a base for building more specialized artificial intelligence systems. These models may be trained on diverse data sets (often including text, images, code, or other modalities) and can be adapted or fine-tuned for a wide range of downstream tasks.

In operation 102, a first machine learning model is distributed, by a software agent executed by a computing device, e.g. device 202 (also referred to herein as host device which can also be a cloud server) shown in FIG. 2, to a plurality of user devices, wherein the software agent provides the plurality of user devices, e.g. devices 210, 220, 230 or 240 shown in FIG. 2, with instructions for the training of the first ML model. For example, a user device may be a computing device (such as a phone, laptop, IoT device, or edge server) that downloads or is provisioned with a local copy or component of the first machine learning model for the purpose of participating in training or fine-tuning.

A software agent may distribute a machine learning model, e.g. a first machine learning model. A software agent may be a computer program that acts autonomously on behalf of a user or another program to perform specific tasks, make decisions, or interact with other systems. Distribution of a machine learning model may proceed without continuous human supervision. A software agent may be stored on a server / storage of a user device, for example a server of user device 210, 220, 230 or 240, or at a computing device 202. A software agent may provide a user device with instructions for the training of the first machine learning model. For example, instructions may include: a) the type of user data sets a user should use in the training (e.g., data sets that use video frames, or sensor readings captured by surveillance cameras at the user's site), b) how events are labelled (e.g., marking frames that contain people, vehicles, or unusual activities and assigning corresponding alarm statuses such as true positive or false positive), c) conditions for the initiation and termination of the training of a first or a pre-trained ML model (e.g., initiating training when a sufficient number of labelled samples have been collected and terminating training when model accuracy exceeds a predefined threshold), and d) privacy rules (e.g., ensuring that raw video data remains on the user device and only model parameters or gradients are transmitted to the host device, e.g. computing device 202). This may enable the provision of automated, context-aware improvement of a pre-trained model at different, respective user devices.

In operation 104, the first ML model is individually trained by each of the plurality of user devices by submitting labelled user data sets to the first ML model, wherein the training of the ML model proceeds according to the instructions provided by the software agent. Individual training of the ML model by a user device of the plurality of user devices may include submitting to the ML model. For example, a first user may train an ML model, e.g. an ML model used in a smart doorbell or home assistant device, to recognize specific sounds - such as knocking, breaking glass, or a familiar voice. In some embodiments, training with labelled user data sets comprises reviewing, by a user, data sets comprising events for which no positive alarm status has been raised by the first ML model, and identifying whether or not the raising of no positive alarm status was correct.

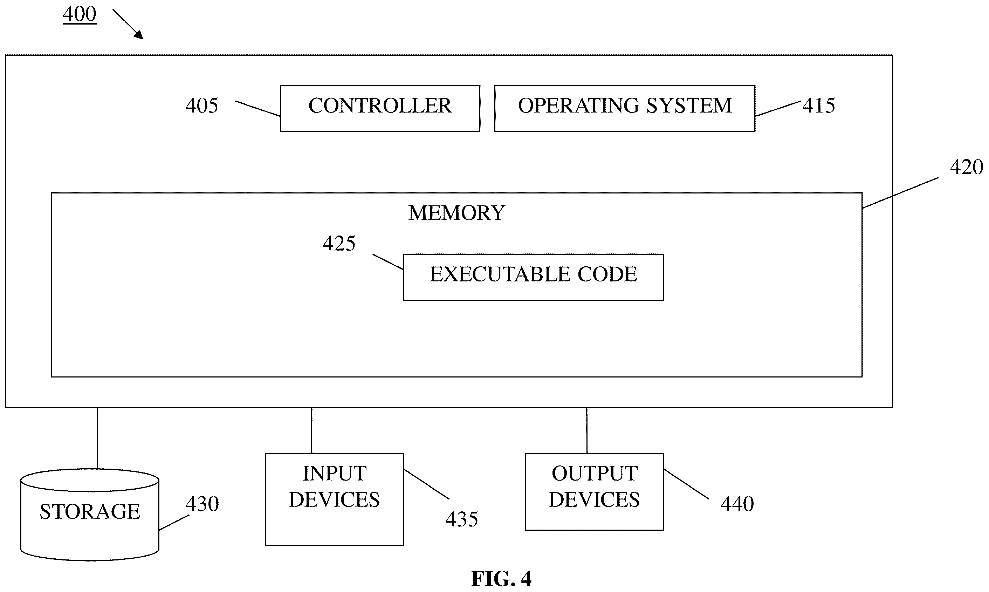

The user device may train the first ML model locally on recorded audio samples from its environment to better detect alarms for relevant events. This may allow the first ML model to trigger alarms, e.g. automated responses (e.g., turning on lights or recording video) when suspicious sounds occur. Since the training can proceed locally on the user device, audio data remains on the user device, and only model parameters or alerts are shared externally if needed. Local training of the first ML model at a user device may include executing the first ML model locally on a server or storage of the individual user device by the respective processor of the user device. For example, a first ML model stored on a server / storage of user device 210 is executed by processor 211. For example, a first ML model stored on a server / storage of user device 210 is executed by processor 211; a first ML model stored on a server / storage of user device 220 is executed by processor 221; a first ML model stored on a server / storage of user device 230 is executed by processor 231; a first ML model stored on a server / storage of user device 240 is executed by processor 241. A software agent, e.g. for the distribution of first machine learning models to a plurality of user devices and for receiving the individual trained first ML models, may be executed by a processor, e.g. a processor 203 of computing device 202 or computing device 400 shown in FIG. 4.

In a second example, a first ML model used as part of a smart home camera may learn to recognize frequent visitors (e.g., family members, delivery personnel) versus unknown individuals. A user device, e.g. a video camera's onboard processor may train a first ML model locally using video frames captured in that specific environment. This may allow the first ML model to reduce false alarms by distinguishing between known and unknown faces or common movements (like pets vs. intruders). Since the training can proceed locally on the user device, raw video footage does not need to be uploaded, for example to a cloud server.

In some embodiments, training of the ML model may proceed using a multi-tier federated learning (FL) architecture. Training of the ML model may proceed at each of the plurality of user devices. In some embodiments, training of the ML model may proceed at a computing device that was used to distribute the first ML model to user devices. In some embodiments, each user device hosts a local aggregation server, which receives a first ML model, e.g. a base anomaly detection model. A first ML model may be pre-trained at a computing device on both public and proprietary data sets before its distribution to a plurality of user devices. A base anomaly detection model may be a first ML model that can detect anomalies in the appearance of objects within a video file or video stream. Anomalies may include, e.g. the detection of an open window or the identification of a person on a property at a specific time of the day. Individual training of the machine learning model by a user device of a plurality of user devices may include fine-tuning of an ML model to a surveillance device, e.g. a video camera or a field of view sensor. For example, a user X may only use video cameras which can record videos in black and white colours. In this example, an ML model may be trained to detect anomalies specifically from video files which have been recorded in black and white. For example, a user Y may only use video cameras which can record videos in form of thermal images. In this example, an ML model may be trained to detect anomalies specifically from video files which have been recorded in form thermal imaging. Local training of an ML model at a user device may be specific to the type of video camera or to the objects to be detected by the video camera. Individual training of the first ML model by a user device, e.g. user device 220, may include training the first ML model using labelled data sets which are controlled by the user of the respective user device. Thus, the user can train the first ML model to their needs. Further, a user can control whether or not they would share data sets with the computing device 202 that provided the user device with the first machine learning model.

In operation 106, the individually trained first ML models are received, by the computing device, and it is identified whether the ML models have been trained according to the software agent's instructions. For example, a software agent may review each of the retrieved individually trained ML models for used training methods, e.g. whether a pre-trained ML model has been trained via method X. The individually trained first ML models may be sent from user devices 210, 220, 230, or 240 to computing device 202.

In operation 108, the individually trained first ML models are combined to create a federated ML model which has been trained according to the software agent's instructions.

Combining the individually trained ML models (e.g. in the form of an aggregation of the individually trained ML models) may be performed on a computing device (e.g. computing device 202), which has distributed a first machine learning model to a plurality of user devices. For example, for an aggregation of ML models trained at different user devices, FedAvg can serve as a baseline for the aggregation of models. In the creation of a federated ML model, a computing device, e.g. computing device 202, may average individually trained first ML models received from a plurality of user devices to produce a federated model.

The averaging can be **weighted** by the size of each client's dataset, e.g. as calculated via example formula I: ${w}_{global} = {\sum }_{k = 1}^{K} \frac{{n}_{k}}{{n}_{total}} {w}_{k}$ where: wₖ = model weights from client k, nₖ = number of training samples on client k and ${n}_{total} = \sum n k k$

Alternative strategies may include performance-weighted averaging, trust-aware filters, and attention-based schemes to prioritise diverse or high-quality updates. Mixture-of-Experts methods are explored to retain domain-specific sub-models (e.g., retail, emergency response) and route them dynamically at inference. For example, in Mixture-of-Experts methods, multiple ML models (referred to as experts) may be trained at different user sites, e.g. user devices 210, 220, 230 or 240. Once the ML models are individually trained, a software agent can separate them based on their application domain (e.g., individually trained ML models trained in the assessment of surveillance data recorded in shopping centers, hospitals etc.). The federated ML model can be a mixture of individually trained ML models which were trained in different application domains (e.g., also referred to as different expert ML models). A federated ML model with ML models having various application domains may include a router which can enable the selection of a specific individually trained ML model to be used for a specific task or surveillance situation by looking at application domains for the individually trained ML models within a federated ML model. Contribution impacts (e.g., F1 improvement) are logged, and low-quality or malicious updates are flagged.

Advantageously, a federated ML model may be created from the individually trained first ML models without the need to transfer video data from the user device, e.g. any of devices 210, 220, 230 or 240, to a host device, e.g. device 202.

In some embodiments, the created federated ML model undergoes a further iteration of training by the plurality of user devices by distributing, by a computing device, the federated ML model to a plurality of user devices. Each of the plurality of user devices may train the federated ML model individually by submitting to the federated ML model labelled user data sets and may receive the individually trained federated ML models. The individually trained federated ML models may be combined to create an updated federated ML model.

In some embodiments, a non-transitory computer readable medium may generate a federated ML model and includes a set of instructions that, when executed, cause at least one computer processor to perform any of the following actions:

At least one computer processor, e.g. processor 203 of computing device 202, may be caused by a software agent to distribute a first machine learning model to a plurality of user devices. A software agent may provide the plurality of user devices with instructions for the training of the first ML model.

At least one computer processor, e.g. processor 203 of computing device 202, may be caused to train the first ML model individually by submitting labelled user data sets to the first ML model, wherein the training of the ML model proceeds according to the instructions provided by the software agent.

At least one computer processor, e.g. processor 203 of computing device 202, may be caused to receive the individually trained first ML models, and identify, by the software agent, whether the ML models have been trained according to the software agent's instructions.

At least one computer processor, e.g. processor 203 of computing device 202, may be caused to combine the individually trained first ML models to create a federated ML model which has been trained according to the software agent's instructions.

FIG. 2 is a schematic drawing of a system 200, according to some embodiments of the invention. System 200 may include a computing device 202 including a processor 203 and storage 204. Computing device 202 may be connected to a plurality of user devices, e.g. user devices 210, 220, 230 and 240. Each of the user devices 210, 220, 230 and 240 may have a processor, e.g. processors 211, 221, 231, and 241, respectively. A user device may be a device that belongs to a user, e.g. a provider of surveillance systems and/or a provider that monitors surveillance systems such as cameras or sensors. In some embodiments, user devices may be cameras or may be connected to cameras such as surveillance cameras. Computing device 202, may be a host device. Host devices can be for example a) a computing device that is at the user level, e.g., a user device such as a camera is connected. In some embodiments, a host device is configured to perform a first aggregation or a subsequent/ higher aggregation.

Computing devices 202, 210, 220, 230, 240 and 400 may be servers, personal computers, desktop computers, mobile computers, laptop computers, and notebook computers or any other suitable device such as a cellular telephone, personal digital assistant (PDA), video game console, etc., and may include wired or wireless connections or modems. Computing devices 202, 210, 220, 230, 240 and 400 may include one or more input devices, for receiving input from a user (e.g., via a pointing device, click-wheel or mouse, keys, touch screen, recorder/microphone, or other input components). Computers 202, 210, 220, 230, 240 and 400 may include one or more output devices (e.g., a monitor, screen, or speaker) for displaying or conveying data to a user.

Any computing devices of FIGs. 2 and 4 (e.g., 202, 210, 220, 230, 240, and 400), or their constituent parts, may be configured to carry out any of the methods of the present invention. Any computing devices of Figs. 2 and 4, or their constituent parts, may include an electronic display a user interface, or another engine or module, which may be configured to perform some or all of the methods of the present invention. Systems and methods of the present invention may be incorporated into or form part of a larger platform or a system/ecosystem, such as agent management platforms. The platform, system, or ecosystem may be executed using the computing devices of FIGs. 2 and 4, or their constituent parts.

A processor such as processor 203 of computing device 202, processor 211 of device 210, and/or processor 221 of computing device 220 may be configured to submit, process and/or receive user data sets. A user data set may include an event and an alarm status for the event. Events may be video files, e.g. a first or second video file, having a sequence of frames, wherein the video file includes a plurality of data items. Events may be recorded by cameras, for example a field of view sensor or a surveillance camera.

A video file may be a digital file that stores moving visual images frames, often accompanied by audio. It typically contains data items, for example compressed video data, audio tracks, and metadata (such as subtitles or file information).

A video file may be generated by a camera, e.g. a surveillance camera or field of view sensors connected to user devices 210, 220, 230, or 240 shown in FIG. 2. A video file may include several video segments, e.g. three video segments. Each video segment may be recorded by one camera. Thus, in some embodiments, a video may include video segments which have been recorded from a plurality of cameras. In some embodiments, a video file includes a plurality of videos which have been captured from a single camera device or a plurality of camera devices. Video cameras may have a specific location, e.g. a location that can be expressed as coordinates within a geographic coordinate system (e.g. GPS coordinates).

Data sets of a plurality of data items within a video file, e.g. a first video file, may include one or more of: physical camera data items, operational metadata items, video metadata items or embeddings. Data sets may be stored in a database, e.g. a database connected to processor 211.

In some embodiments, cameras connected to a user device may be surveillance cameras. They may be recording or live-view devices having specific properties which can be expressed as physical camera data items. Physical camera data items may include, for example, camera make and model lens type and focal length, aperture, shutter speed, ISO or gain, white balance, GPS coordinates (camera location), and orientation or tilt of the camera.

Operational metadata items may include, for example, video file name or scene identifier, date and time of recording, operator or camera identifier.

Video metadata items may include, for example, frame rate and resolution, bit rate and codec information, duration and timecode, subtitles or captions, content tags or keywords.

Data sets may include events, e.g. an open door of a house, an open entrance door, or an open window.

A processor, such as processor 203 of computing device 202, processor 211 of device 210, and/or processor 221 of computing device 220 may be configured to distribute a first machine learning model and a software agent to a plurality of user devices, wherein the software agent provides the plurality of user devices with instructions for the training of the first ML model.

A software agent may distribute a machine learning model, e.g. a first machine learning model. A software agent may provide a user device with instructions for the training of the first machine learning model. For example, a software agent may instruct a user device, e.g. user device 210, 220, 230 or 240, to collect specific types of data, such as video frames, or sensor readings, from designated sources and to preprocess the collected data by resizing images, normalizing pixel values, or removing corrupted samples before the training begins. In another example, a software agent may further instruct a user device e.g., user device 210, 220, 230 or 240, to label the collected data by marking relevant features or events, such as identifying frames containing people, vehicles, or unusual activities, and to follow predefined labelling guidelines or examples to ensure consistency and accuracy across the dataset.

A user having a user device may be identified for the training of an ML model. For example, a user device for the training of an ML model may be identified based on the type of user data sets which are produced by the user device, e.g. user data sets that include events such as surveillance events and an alarm status for such an event. An alarm status for an event may be one of: a false positive alarm status, a false negative alarm status, a true positive alarm status or a true negative alarm status.

The distribution of an ML model to a user device may proceed by sending from a computing device, e.g. computing device 202, or a server connected to computing device 202, an ML model and instructions for the training of the ML model in the form of a software agent to a user device, e.g. user device 210.

A first machine learning model may be a base machine learning model. A base machine learning model may be an initial model used in a machine learning process. It may serve as a starting point for comparison, evaluation, or further improvement.

A processor, such as processor 203 of computing device 202, processor 211 of device 210, and/or processor 221 of computing device 220 may be configured to train the first ML model distributed to each of the plurality of user devices individually by submitting to the first ML model labelled user data sets, wherein the training of the ML model proceeds according to the instructions provided by the software agent.

The submission of user data sets to the ML model may enable individual training of the ML model by data sets of a first user device. This can include customizing the first ML model with user data sets of a first user, e.g. via user device 210, 220, 230 or 240. Customization may include training of a user data set based on specific data sets of one user. For example, a user may train the ML model with data sets of a specific surveillance event. For example, labelled user data sets submitted to the ML model may include an event such as a detection of open roof windows and the generation of an alarm for such an event.

Training of an ML model with user data sets of a specific user device from a plurality of user data sets may improve the ML model's in its ability to correctly assign or not assign an alarm for an event. For example, an ML model can be fine-tuned to detect alarms for a specific event based on a provided user data set. User data sets used in the training of an ML model may be fully or partially labelled. In some embodiments, individual training of the pre-trained ML model with the labelled user data sets includes providing the pre-trained ML model with pairs of an event and alarm status for the event.

A partially labelled dataset in machine learning may refer to a dataset where only some of the data points have labels, while the rest remain unlabelled. For example, a partially labelled data set may have event data of an event but does not include an indication whether or not an alarm is raised. Labelled data sets include data sets which have both input features and known target outputs (e.g., an event and an alarm status for the event).

Each of the user devices of the plurality of user devices may individually train the first ML model. For example, user 1 may train ML model A, user 2 may train ML model B and user 3 may train ML model C.

For example, during the labelling process, when a first ML model is trained at a user device of a user, the ML model deployed at the user device may be used to generate alarms for the events that it is expected to detect. When an alarm is generated, an operator may investigate the event to verify if it is false positive or not. This information can be used at a user's device to fine tune the first ML model. Accordingly, labelling of an event with an alarm status may proceed by a human operator. This may continue for a predefined time window in the generation of a federated ML model. This may continue for a predefined time window in the generation of an iteration of a federated ML model, e.g. when a federated ML model undergoes a further iteration of training by the plurality of user devices. This may include further distributing, by a computing device, the federated ML model to a plurality of user devices; each of the plurality of user devices, training the federated ML model individually by submitting to the federated ML model labelled user data sets; receiving, by the computing device, the individually trained federated ML models; and combining the individually trained federated ML models to create an updated federated ML model.

In the generation of user data sets for the training of an ML model, cameras used for the recording of events may be grouped by physical location, with one or more sites belonging to a user. In some embodiments, advantageously, raw video data generated by a user device remains stored at the user device. User data is not exported, e.g. to the computing device 202 that distributed the ML models. In the assessment of alarms for events, motion detection in XProtect, combined with object detectors such as YOLOv12, can identify relevant video segments, e.g. a video segment showing an open door recorded by a surveillance camera. Video files can be transformed into spatiotemporal embeddings using advanced pre-trained architectures (e.g. using ViTs, I3D, TimeSformer). The resulting embeddings can be clustered (e.g. using K-Means, DBSCAN) into three categories: (1) dominant patterns, (2) rare events, and (3) anomalies. For example, alarms for the categorized events may be labelled by human operators. For example, human annotators may label 20%, 50%, and 100% of these categories respectively, with the remainder pseudo-labelled through self-supervised learning.

This cycle can be repeated monthly. Once embedding, clustering, labelling, and model training/testing are complete, the original video data is discarded. Synthetic augmentation may be used to enrich rare or anomalous classes. Most normal samples are used for the training of ML models, while the remaining normal samples and all anomalies are reserved for testing of the trained ML models. A video management software's (e.g. XProtect's) annotation pipeline can underpin distributed labelling and full compatibility with the federation process.

The federated learning (FL) architecture disclosed herein may enable training and aggregation at three levels: at the computing device that distributes the ML model systems, at the user, and cross-user. Each user device may host a local aggregation server, which receives a base anomaly detection model trained at the computing device 202 on both public and proprietary data sets. Fine-tuning may occur locally at each camera connected to a user device, e.g. a camera connected to user device 220. Aggregation may first proceed at site level, then user level, and optionally at the global level across users. For global aggregation, Federated Averaging (FedAvg) can serve as a baseline for the detection of alarms; alternative strategies include performance-weighted averaging, trustaware filters, and attention-based schemes to prioritize diverse or high-quality updates. Federated Averaging is the core algorithm used in federated learning to combine ML model updates from multiple users (e.g. multiple user devices) into a federated model. This may advantageously proceed without sharing raw data of the individual user devices.

A processor such as processor 203 of computing device 202, processor 211 of device 210, and/or processor 221 of computing device 220 may be configured to receive the individually trained first ML models, and may be configured to identify whether the ML models have been trained according to the software agent's instructions. For example, a software agent may identify whether an individually trained ML model was trained according to the software agent's instructions by checking whether a log of the training model meets predefined training criteria.

Individually trained ML models may be received from the user devices, e.g. user devices 220 or 230, at a computing device, e.g. computing device 202.

A processor, such as processor 203 of computing device 202 processor 211 of device 210, and/or processor 221 of computing device 220, may be configured to combine the individually trained first ML models to create a federated ML model which has been trained according to the software agent's instructions.

Received trained ML models at may be combined, e.g. merged. Merging of the ML models may proceed, for example when ML models have been trained on a similar surveillance domain, e.g. trained on shopping center surveillance data. ML models of different application domains, e.g. trained on shopping center surveillance data and prison surveillance data may be combined using Mixture-of-Experts methods as described above. Combination of the ML models may provide a federated ML model, e.g. a single, improved ML model.

A created federated ML model may be used in the identification of alarms for events identified in videos recorded by surveillance cameras.

A federated model may be used in the training of an updated federated ML model. This may include training of the federated ML model by the plurality of user devices by distributing, by a computing device, the federated ML model to a plurality of user devices; each of the plurality of user devices, training the federated ML model individually by submitting to the federated ML model labelled user data sets; receiving, by the computing device, the individually trained federated ML models; and combining the individually trained federated ML models to create an updated federated ML model.

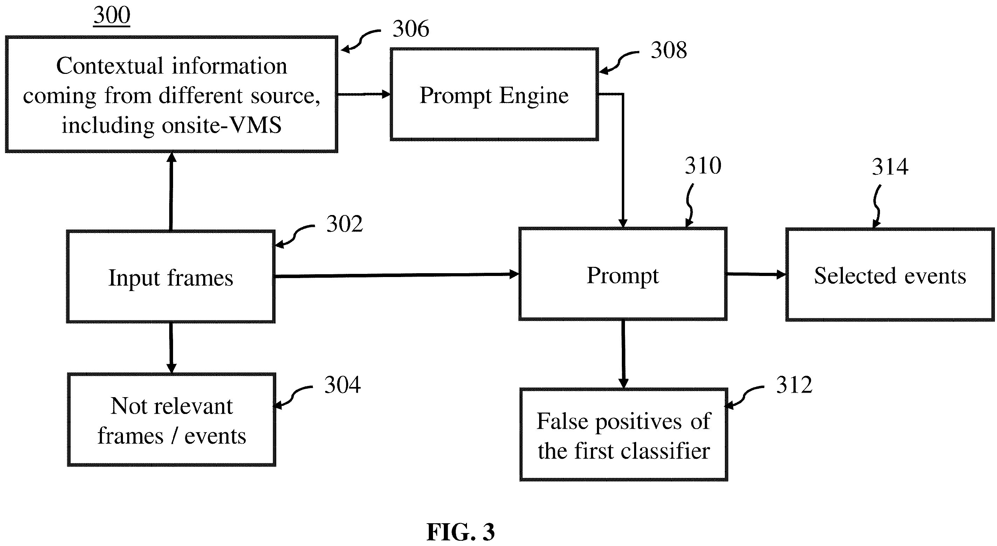

FIG. 3 illustrates applications for a generated federated model. FIG. 3 illustrates a cascading set up 300 for the reduction of false positive results.

In the workflow shown in FIG. 3, a cascaded architecture may be used for the selection of specific events in frames of videos submitted to a federated model and the reduction of false positive alarms for events. Video files, e.g. in form of frames 302, may be retrieved at a federated ML model, e.g., stored at a cloud server or at device 202. Federated ML model may filter non-relevant frames or non-relevant events 304, e.g. frames that just showed a test image of a camera. Frames which have been classified as relevant frames may be combined with contextual information 306. Contextual information may be retrieved from a source such as an on-site video management systems (VMS). Contextual information and classified relevant frames and contextual information may be processed by a prompt engine 308 to generate prompts 310 which are suitable for the detection of events within the retrieved input frames. For example, for a ML model "A" in the field of traffic surveillance, a prompt engine 308 may generate prompts that are specific to the field of traffic surveillance. In this process, camera footage in form of frames 302 from user devices, e.g. user device 210, 220, 230 or 240 may be analysed by a VMS to filter and discard frames that do not show frames of traffic surveillance, e.g. to discard frames showing hospital surveillance. Relevant frames that show traffic surveillance may be augmented with contextual information, e.g. the camera location that recorded the frame or the time at which the frame was recorded. Prompt engine 308 may generate prompts for the identification of specific events in the retrieved input frames. For example, specific events for ML model "A", specific event of interest which this ML had been trained to analyse may related to the traffic surveillance domain. For example, prompt engine 308 may generate prompts 310 for traffic accidents that happened at night-time between pedestrians and cars, or prompts for traffic accidents that happened at day-time between pedestrians and cars. Input frames 302 from surveillance cameras may be reviewed in view of the prompts submitted to the ML model, e.g. ML model "A" to identify potential events of interest within the frames 302. In some embodiments, an application may filter false positive results of the first classifier 312, e.g. events for which an alarm has been raised as showing an interesting event but which are not relevant for a specified domain the ML model was trained to review. For example, events that do not show accidents that happened between pedestrians and cars either at night-time or at day-time may be removed from the prompts. Selected events 314, e.g. which are not false positives of a first classifier 312, may be submitted to a user, e.g. located at a user device 210, 220, 230 or 240 shown in FIG. 2 for further analysis. Thus, the federated ML model may output verified events 314, e.g. for which an alarm has been raised, in a specific field for which the federated ML model was trained. These events 314 may be reviewed by a user or may trigger an automated response. This cascaded configuration may enable efficient event filtering, minimizes unnecessary user workload, and can enhance overall system reliability by leveraging multimodal contextual data and intelligent prompt generation via the federated ML model.

In summary, a developed federated ML model, e.g. created from a first ML model as described herein, can be provided on a cloud server, e.g. the federated model may be hosted by a host that initiated the training of the federated model, at a security operations center, or anywhere else). A federated model may be used, for example, in a cascaded setup, to filter user data sets that include events for alarms and may reduce false positives, before showing labelled user data sets to human operators.

A federated ML model may be used to improve custom classifiers. For example, a system may be used to improve a custom classifier, e.g. as described in U.S. patent application publication No. US 2024/0233327. For example, by creating a federated ML model which has been individually trained by user devices, classifiers for events present in user data sets generated for user A may be combined with classifiers for events present in user data sets generated for user B. For example, a user's classifier that detects full body clothing, may be combined with another user's classifier that detect hats, and with another user's classifier that detect shoes, to provide a federated ML model which has the capability to detect persons that fulfils the conditions defined by all the three classifiers.

A federated ML model may be used to describe events. An event may be a false positive, false negative, true positive or true negative alarm. For example, when an event is closed, usually operators need to describe the incident. The developed federated models can be used for describing such events.

A federated ML model may be monetized when it is queried in a request. For example, a service to data owners may be offered that, upon participation in the construction of the federated model, e.g. by receiving a first ML model and instructions for training the first ML model and providing to a computing device a trained first ML model, they can get a small payment every time the federated model is used.

A federated ML model may be used in the development of artificial intelligence agents that can reduce the manual workload of human operators in the detection of alarms for events. For example, working as an operator in security operation center comes with many issues including alarm fatigue, which results in a high turnover in this job category. The above solution, that reduces the false positives, provides the possibility of deploying agents that can take over many of the repetitive operations, from extracting of contextual information, devising prompts, inferencing the models, describing the events, etc.

FIG. 4 shows a high-level block diagram of an exemplary computing device which may be used with embodiments of the present invention. Computing device 400 may include a controller or processor 405 that may be, for example, a central processing unit processor (CPU), a chip or any suitable computing or computational device, an operating system 415, a memory 420, a storage 430, input devices 435 and output devices 440 such as a computer display or monitor displaying for example a computer desktop system. Each of modules and equipment and other devices and modules discussed herein, e.g. prompt engine 308 and modules in FIGS. 1, 2, 3 may be or include, or may be executed by, a computing device such as included in FIG. 4 although various units among these modules may be combined into one computing device.

Operating system 415 may be or may include any code segment designed and/or configured to perform tasks involving coordination, scheduling, arbitration, supervising, controlling or otherwise managing operation of computing device 400, for example, scheduling execution of programs. Memory 420 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 420 may be or may include a plurality of, possibly different memory units. Memory 420 may store for example, instructions (e.g. code 425) to carry out a method as disclosed herein, and/or data.

Executable code 425 may be any executable code, e.g., an application, a program, a process, task or script. Executable code 425 may be executed by controller 405 possibly under control of operating system 415. For example, executable code 425 may be one or more applications performing methods as disclosed herein, for example those of FIG. 1, or other figures, or other methods, according to embodiments of the present invention. In some embodiments, more than one computing device 400 or components of device 400 may be used for multiple functions described herein. For the various modules and functions described herein, one or more computing devices 400 or components of computing device 400 may be used. Devices that include components similar or different to those included in computing device 400 may be used, and may be connected to a network and used as a system. One or more processor(s) 405 may be configured to carry out embodiments of the present invention by, for example, executing software or code. Storage 430 may be or may include, for example, a hard disk drive, a floppy disk drive, a Compact Disk (CD) drive, a CD-Recordable (CD-R) drive, a universal serial bus (USB) device or other suitable removable and/or fixed storage unit. Data may be stored in a storage 430 and may be loaded from storage 430 into a memory 420 where it may be processed by controller 405. In some embodiments, some of the components shown in FIG. 4 may be omitted.

Input devices 435 may be or may include a mouse, a keyboard, a touch screen or pad or any suitable input device. It will be recognized that any suitable number of input devices may be operatively connected to computing device 400 as shown by block 435. Output devices 440 may include one or more displays, speakers and/or any other suitable output devices. It will be recognized that any suitable number of output devices may be operatively connected to computing device 400 as shown by block 440. Any applicable input/output (I/O) devices may be connected to computing device 400, for example, a wired or wireless network interface card (NIC), a modem, printer or facsimile machine, a universal serial bus (USB) device or external hard drive may be included in input devices 435 and/or output devices 440.

Embodiments of the invention may include one or more article(s) (e.g. memory 420 or storage 430) such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein.

The aforementioned flowcharts and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved, It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

As will be appreciated by one skilled in the art, aspects of the present invention may be embodied as a system or an apparatus. Accordingly, aspects of the present invention may take the form of an entirely hardware embodiment or an embodiment combining software and hardware aspects that may all generally be referred to herein as a "circuit," "module" or "system."

The aforementioned figures illustrate the architecture, functionality, and operation of possible implementations of systems and apparatus according to various embodiments of the present invention. Where referred to in the above description, an embodiment is an example or implementation of the invention. The various appearances of "one embodiment," "an embodiment" or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions. It will further be recognized that the aspects of the invention described hereinabove may be combined or otherwise coexist in embodiments of the invention.

It is to be understood that the phraseology and terminology employed herein is not to be construed as limiting and are for descriptive purpose only.

The principles and uses of the teachings of the present invention may be better understood with reference to the accompanying description, figures and examples.

It is to be understood that the details set forth herein do not construe a limitation to an application of the invention.

Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element.

It is to be understood that where the claims or specification refer to "a" or "an" element, such reference is not be construed that there is only one of that element.

It is to be understood that where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples and materials presented in the claims and the specification are not to be construed as limiting but rather as illustrative only.

Meanings of technical and scientific terms used herein are to be commonly understood as by one of ordinary skill in the art to which the invention belongs, unless otherwise defined.

The present invention may be implemented in the testing or practice with materials equivalent or similar to those described herein.

While the invention has been described with respect to a limited number of embodiments, these should not be construed as limitations on the scope of the invention, but rather as exemplifications of some of the preferred embodiments. Other or equivalent variations, modifications, and applications are also within the scope of the invention. Accordingly, the scope of the invention should not be limited by what has thus far been described, but by the appended claims and their legal equivalents.

## Claims

1. A method of training machine learning (ML) models, the method comprising:
distributing, by a software agent executed by a computing device, a first machine learning model to a plurality of user devices, wherein the software agent provides the plurality of user devices with instructions for the training of the first ML model;
each of the plurality of user devices, training the first ML model individually by submitting to the first ML model labelled user data sets, wherein the training of the ML model proceeds according to the instructions provided by the software agent;
receiving, by the computing device, the individually trained first ML models, and identifying whether the trained ML models have been trained according to the software agent's instructions; and
combining the individually trained first ML models to create a federated ML model, which has been trained according to the software agent's instructions.

2. The method according to claim 1, wherein the first ML model is a pre-trained model and the pre-trained model is trained individually by submitting to the pre-trained ML model labelled user data sets to provide trained first ML models.

3. The method according to claim 1, wherein the individual training of the first ML model with the labelled user data sets comprises providing the first ML model with pairs of an event and alarm status for the event.

4. The method according to claim 3, wherein the alarm status for the event is one of: a false positive alarm status, a false negative alarm status, a true positive alarm status and a true negative alarm status.

5. The method according to claim 4, wherein the event is labelled with the alarm status by a human operator.

6. The method according to claim 5, wherein the training with labelled user data sets comprises reviewing, by a user, data sets comprising events for which no positive alarm status has been raised by the first ML model, and identifying whether or not the raising of no positive alarm status was correct.

7. The method according to any of claims 1-6, wherein the user data sets are at least partially labelled.

8. The method according to any of claims 1-7, wherein the events are recorded by cameras, wherein the cameras are one of: a field of view sensor and a surveillance camera.

9. The method according to any of claims 1-7, wherein the federated ML model undergoes a further iteration of training by the plurality of user devices by distributing, by a computing device, the federated ML model to a plurality of user devices; each of the plurality of user devices, training the federated ML model individually by submitting to the federated ML model labelled user data sets; receiving, by the computing device, the individually trained federated ML models; and combining the individually trained federated ML models to create an updated federated ML model.

10. The method according to any of claims 1-9, wherein the federated ML model is used in the identification of alarms for events identified in videos recorded by surveillance cameras, and the labelled user data sets comprise surveillance data selected from one or more of: image data items, video data items and audio data items.

11. A system for generating a federated machine learning "ML" model, the system comprising:
a computer processor arranged to:
distribute a first machine learning model and a software agent to a plurality of user devices, wherein the software agent provides the plurality of user devices with instructions for the training of the first ML model;
train the first ML model distributed to each of the plurality of user devices individually by submitting to the first ML model labelled user data sets, wherein the training of the ML model proceeds according to the instructions provided by the software agent;
receive the individually trained first ML models, and identifying whether the ML models have been trained according to the software agent's instructions; and
combine the individually trained first ML models to create a federated ML model which has been trained according to the software agent's instructions.

12. The system according to claim 11, wherein the first ML model is a pre-trained model and the pre-trained model is trained individually by submitting to the pre-trained ML model labelled user data sets to provide trained first ML models.

13. The system according to claim 11, wherein the individual training of the first ML model with the labelled user data sets comprises providing the first ML model with pairs of an event and alarm status for the event.

14. The system according to claim 13, wherein the alarm status for the event is one of: a false positive alarm status, a false negative alarm status, a true positive alarm status and a true negative alarm status.

15. A non-transitory computer readable medium for generating a federated ML model comprising a set of instructions that, when executed, cause at least one computer processor to:
distribute, by a software agent executed by a computing device, a first machine learning model to a plurality of user devices, wherein the software agent provides the plurality of user devices with instructions for the training of the first ML model;
train the first ML model individually by submitting to the first ML model labelled user data sets, wherein the training of the ML model proceeds according to the instructions provided by the software agent;
receive the individually trained first ML models, and identify, by the software agent, whether the ML models have been trained according to the software agent's instructions; and
combine the individually trained first ML models to create a federated ML model which has been trained according to the software agent's instructions.
